# EUROPÄISCHE PATENTANMELDUNG

(11) **EP 1 041 365 A1**
(43) Veröffentlichungstag der Anmeldung: **04.10.2000**
(21) Anmeldenummer: 99106624.2
(22) Anmeldetag: 31.03.1999
(51) Int. Cl.: G01F 1/06, G01F 15/14

(54) **Zähler für fliessfähige Medien**

(71) Anmelder: Körner, Hans-Holger, 23758 Oldenburg in Holstein (DE)
(72) Erfinder: Körner, Hans-Holger, 23758 Oldenburg in Holstein (DE)
(74) Vertreter: Glawe, Delfs, Moll & Partner

(57) **Zusammenfassung**

Zähler für fließfähige Medien mit einem Rohranschlußgehäuse (1), das aus einem Gehäusetopf (2) und wenigstens einem fest damit verbundenen, zur mechanisch festen Verbindung mit einem Anschlußrohr ausgebildeten Rohranschlußstutzen (3, 4) besteht. Der Rohranschlußstutzen ist mit einem Einlegestutzen (22) aus leicht formbarem Material wie Kunststoff hergestellt, der einerseits gegenüber der Meßkapsel (10) und andererseits gegenüber dem Rohranschlußstutzen (3, 4) abgedichtet ist. Das Rohranschlußgehäuse wird dadurch von der Notwendigkeit der Abdichtung gegenüber der Kapsel befreit, und auf eine dichte Verbindung des Gehäusetopfs mit dem Rohranschlußstutzen kommt es nicht an. Diese Teile brauchen lediglich im Hinblick auf die mechanische Festigkeit des Rohranschlusses ausgebildet zu werden. Der Einlegestutzen (22) vermittelt die Abdichtung und bildet einen qualifizierten Zuströmkanal (29).

## Beschreibung

Die Erfindung bezieht sich auf einen Zähler für fließfähige Medien gemäß dem Oberbegriff des Anspruchs 1. Dieser bezieht sich auf einen bekannten Zähler (EP-A 682 234), bei dem für den Anschluß des Zählers an ein Zu- oder Abführungsrohr ein Rohranschlußgehäuse vorgesehen ist, das die mit dem Zählwerk verbundene Meßkapsel aufnimmt. Das Rohranschlußgehäuse besteht einstückig aus einem topfförmigen Teil und den von dessen Umfangswand ausgehenden Rohranschlußstutzen. Deren innere Öffnungen sind von Stutzendichtflächen umgeben, die mit entsprechenden Kapseldichtflächen der von dem Gehäusetopf aufgenommenen Meßkapsel zusammenwirken. Dadurch bleibt das Medium auf die Strömungswege der Stutzen und der Meßkapsel beschränkt, ohne in den Zwischenraum zwischen Gehäusetopf und Meßkapsel zu gelangen.

Ferner ist es bekannt (EP-A 882 950), die Rohranschlußstutzen als vom Gehäusetopf gesonderte Teile vorzusehen. Sie ragen durch im Gehäusetopf vorgesehene Öffnungen und werden darin durch einen Kragen gehalten, der auch die Stutzendichtfläche bildet. Dies erlaubt die Fertigung des Gehäusetopfs aus ferromagnetischem, nicht korrosionsbeständigem Werkstoff. Da die Stutzen die mechanische Verbindung des Zählers mit den Anschlußrohren übernehmen, müssen sie selbst und ihre Verankerung am Gehäusetopf hinreichend fest sein, was mit unerwünschtem Aufwand verbunden sein kann, den die Erfindung zu vermeiden sucht.

Dies wird erreicht durch die Merkmale des Anspruchs 1 sowie vorzugsweise diejenigen der Unteransprüche.

Danach ist vorgesehen, daß die Abdichtung im Verhältnis zur Meßkapsel nicht von dem Rohranschlußstutzen und dem Gehäusetopf übernommen wird, sondern von Einlegestutzen, vorzugsweise aus Kunststoff, die einerseits die Stutzendichtflächen tragen, über die sie dicht an die Meßkapsel angeschlossen sind, und andererseits gegenüber den Rohranschlußstutzen oder einem damit verbundenen Rohr abgedichtet sind.

Dadurch ist das Rohranschlußgehäuse einschließlich seiner Stutzen von jeglichen Aufgaben der Abdichtung gegenüber der Meßkapsel befreit. Es kann ausschließlich nach anderen Gesichtspunkten entworfen werden, insbesondere im Hinblick auf die Fertigungstechnik, die mechanische Kraftübertragung oder die magnetische Abschirmung des Meßwerks. Die Erfindung gestattet es, den Gehäusetopf als billiges Tiefziehteil herzustellen. Er kann ohne Rücksicht auf Korrosionsanfälligkeit aus ferromagnetischem Material, beispielsweise Eisenblech, bestehen. Die Stutzen, die gleichfalls aus Metall bestehen, werden damit vorzugsweise verschweißt oder verlötet oder durch ein Preßverfahren verbunden, wobei es auf Dichtigkeit nicht ankommt. Diese wird vielmehr durch den Einlegestutzen gewährleistet. Wenn dieser außer der Meßkapsel nur gegenüber dem Rohranschlußstutzen abgedichtet ist, wird er zweckmäßigerweise aus korrosionsbeständigem Werkstoff hergestellt. Wenn der Einlegestutzen zur Abdichtung gegenüber dem mit dem Rohranschlußstutzen zu verbindenden Anschlußrohr ausgebildet ist, kann auch der Rohranschlußstutzen aus unedlem Werkstoff bestehen.

Zwar ist es bekannt, Rohranschlußstutzen mit einem Gehäusetopf zu verschweißen (GB-A 2 023 748). Dabei wird aber an der unmittelbaren Abdichtung der inneren Zählerteile gegenüber dem Gehäusetopf festgehalten. Dieser wird auch vom Medium berührt und muß demzufolge aus korrosionsfestem Material bestehen, und die Verschweißung zwischen dem Gehäusetopf und den Stutzen muß vollständig dicht sein.

Für die Meßkapsel muß im Gehäusetopf ein genauer Sitz gewährleistet sein, damit der dichte Anschluß an die Stutzendichtflächen zustande kommt und die Strömungswege genau aneinander anschließen. Dies ist zwar auch dann möglich, wenn die den Sitz für die Meßkapsel bildenden Flächen von dem Gehäusetopf selbst gebildet werden. Vorzuziehen ist aber eine Anordnung, bei welcher innerhalb des Gehäusetopfs eine Topfeinlage, insbesondere aus Kunststoff, vorgesehen ist, die diesen Sitz bildet, indem ihre Innenform der Außenform der Meßkapsel entspricht. Nach einem besonderen Merkmal der Erfindung kann diese Topfeinlage oder ein Teil derselben einstückig mit dem Einlegestutzen ausgebildet sein.

Die Erfindung wird im folgenden näher unter Bezugnahme auf die Zeichnung erläutert, die vorteilhafte Ausführungsformen veranschaulicht. Es zeigen:
- Fig. 1: einen Längsschnitt durch einen Zähler,
- Fig. 2 u. 3: Längsschnitte durch alternative Stutzenausführungen und
- Fig. 4: einen Horizontal-Längsschnitt durch den Zähler.

Das Rohranschlußgehäuse 1 des Zählers besteht aus dem Gehäusetopf 2 und den Stutzen 3, 4, von dem einer dem Auslauf und der andere dem Einlauf zugeordnet ist und die in dem Ausführungsbeispiel diametral zueinander angeordnet sind. Sie können auch eine andere Anordnung haben. Es besteht auch die Möglichkeit, daß nur einer der beiden Stutzen mit seinen zugehörigen Teilen in der erfindungsgemäßen Weise ausgebildet ist.

Der Gehäusetopf 2 ist beispielsweise aus Stahlblech tiefgezogen und mit den Rohranschlußstutzen 3, 4 bei 5 verschweißt, wobei es genügt, diese Verschweißung (oder sonstige kraftübertragende Verbindung) stellenweise vorzusehen, da Dichtheit nicht verlangt wird.

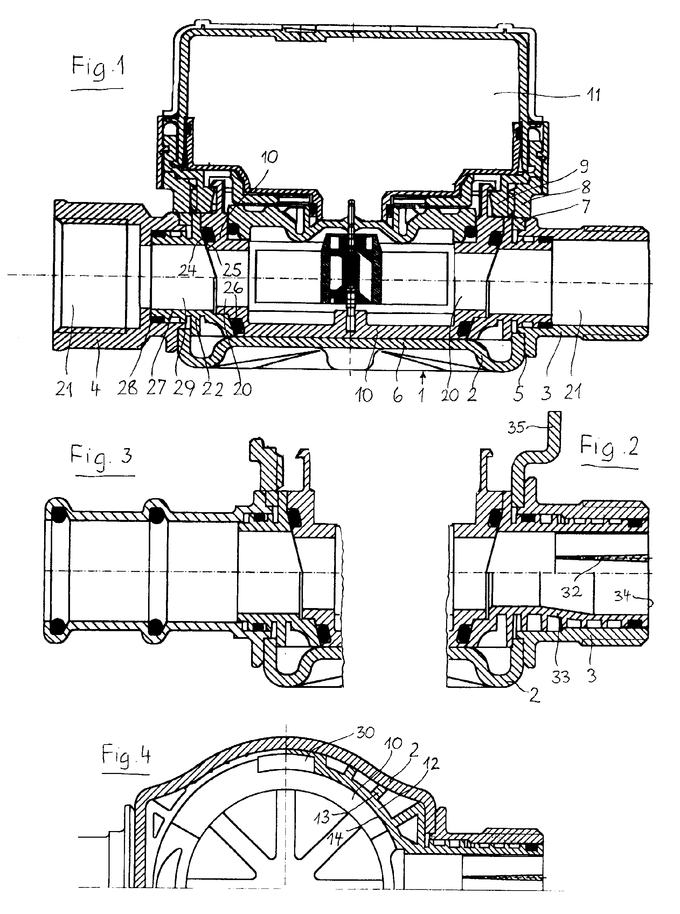

Der Rand 7 des Gehäusetopfs ist mit einem Gewindekragen 8 verschweißt, wobei diese Verschweißung gleichfalls nicht dicht zu sein braucht. Der Gewindekragen 8 dient zum Befestigen der Meßkapsel mittels eines Gewinderings 9. Statt dessen besteht auch die in Fig. 2 veranschaulichte Möglichkeit, den Rand 35 zur Verbindung mit der Kapsel mit einem tiefgezogenen Rand 35 zu versehen, der einstückig beispielsweise zur Bildung eines Renk- oder Bajonettverschlusses geformt ist.

Von der Meßkapsel interessiert im vorliegenden Zusammenhang lediglich das Kapselgehäuse 10, das das Meßwerk enthält und zusammen mit dem Zählwerk 11 die Kapsel bildet, die als bauliche Einheit in das Rohranschlußgehäuse 1 eingesetzt werden kann.

Der Gehäusetopf 2 ist mit einem geschlossenen Boden 6 versehen. Dies ist zur Schaffung eines guten Sitzes für die Meßkapsel und zur großflächigen Abstützung des Kapselbodens zweckmäßig, aber nicht erforderlich.

Am Umfang wird der Sitz für das Kapselgehäuse 10 von einer Topfeinlage 12 gebildet, die vorzugsweise ein Kunststoffteil ist und einerseits sich über vorstehende Rippen 13 maßtolerant an den Gehäusetopf anlegt und andererseits eine Innenfläche 14 bildet, die genau der Außenfläche des Kapselgehäuses 10 entspricht.

Das Kapselgehäuse 10 enthält diametral gegenüberliegend Ein- und Auslauföffnungen 20, die im korrekten Einbauzustand mit den in den Stutzen 3, 4 gebildeten Kanälen 21 fluchten. Die Verbindung zwischen den Kanälen 20, 21 wird durch die Einlegestutzen 22 hergestellt, die innerhalb des Gehäusetopfs 2 jeweils einen Kragen 23 aufweisen, dessen Stirnfläche 24 die Stutzendichtfläche bildet, die mit der entsprechend geformten, die Kapselöffnung 20 umgebenden Kapseldichtfläche 25 zusammenwirkt, die einen Dichtring 26 enthält. Durch kegelige oder keilförmige Gestaltung dieser Stutzendichtflächen 24, 25 kann sichergestellt werden, daß die Kapsel leicht eingesetzt werden kann und in der Endposition die erforderliche Dichtpressung zwischen den Dichtflächen 24, 25 bzw. an den Dichtringen 26 vorhanden ist.

Die Einlegestutzen 22 setzen sich vom Kragen 23 ausgehend bis zu den Stutzen 21 fort, sind diesem gegenüber mittels eines O-Rings 28 abgedichtet und dringen vorzugsweise mit einem rohrförmigen Teil 27 koaxial in den Stutzen 21 ein. Sie bestehen aus Kunststoff oder einem anderen mit hoher Genauigkeit leicht formbaren Material. Wie in Fig. 4 dargestellt, sind sie einstückig mit der Topfeinlage 12 geformt. Dadurch erhalten sie in bezug auf den Gehäusetopf 2 einen sicheren Sitz. Außerdem wird dadurch ihre Position gegenüber dem Kapselgehäuse 10 eindeutig bestimmt. Der leichteren Montierbarkeit wegen kann die Topfeinlage geteilt ausgeführt sein.

Falls die Ein- und Auslaufstutzen unterschiedlich sind, kann durch formschlüssiges Zusammenwirken mit der Meßkapsel bzw. dem Gehäusetopf dafür gesorgt werden, daß alle Teile nur in korrekter Ausrichtung zusammengesetzt werden können. Beispielsweise ist in Fig. 4 gezeigt, daß das Kapselgehäuse 10 beiderseits unterschiedlich breite Vorsprünge 30, 31 trägt, die mit entsprechenden Ausnehmungen der Kapseleinlage 12 zusammenwirken. Diese kann wiederum, falls erforderlich, in analoger Weise richtungsbestimmend mit dem Gehäusetopf zusammenwirken.

Ein oft wichtiger Vorteil der Erfindung besteht darin, daß mit Hilfe des Einlegestutzens auf der Zulaufseite ein Strömungskanal 29 gewünschter Form und hoher Qualität gebildet werden kann. Fig. 2 zeigt oberhalb und unterhalb der Mittellinie beispielsweise zwei unterschiedliche Ausführungsmöglichkeiten. In der oberen Hälfte ist der Kanal 29 zylindrisch und mit strömungsvergleichmäßigenden Leitflächen 32 gezeigt. In der unteren Hälfte wird eine Vergleichmäßigung der Strömung durch Verminderung des Querschnitts erreicht.

Ferner erkennt man durch den Vergleich der Fig. 1 und 2 deutlich, daß die Länge des Einlegestutzens in weiten Grenzen variiert werden kann.

Wie Fig. 2 zeigt, kann der Einlegestutzen sich sogar auf die gesamte Länge des Rohranschlußstutzens 3 erstrecken. Wenn man sich vorstellt, daß ein Rohranschluß mit Stirnflächendichtung verwendet wird, erkennt man leicht, daß die Stirnfläche 34 des Einlegestutzens 33 direkt gegenüber dem Anschlußrohr abgedichtet werden kann. In diesem Fall bleibt der Rohranschlußstutzen 3 vom Medium unbenetzt, so daß es auf seine Korrosionsfestigkeit nicht ankommt.

Fig. 3 zeigt wieder eine andere Form eines Rohranschlußstutzens, der durch Verpressung mit dem Anschlußrohr zu verbinden ist. Er enthält O-Ringe, die die Dichtung gegenüber dem Anschlußrohr bewirken. Da er vom Medium benetzt wird (wie auch die Anschlußstutzen 3, 4 in Fig. 1), sollte er aus korrosionsbeständigem Material bestehen.

## Patentansprüche

1. Zähler für fließfähige Medien mit einem Rohranschlußgehäuse (1), das aus einem Gehäusetopf (2) und wenigstens einem fest damit verbundenen, zur mechanisch festen Verbindung mit einem Anschlußrohr ausgebildeten Rohranschlußstutzen (3, 4) besteht, dessen innere Öffnung von einer Stutzendichtfläche (24) umgeben ist, und mit einer von dem Gehäusetopf (2) aufgenommenen Meßkapsel (10), die eine mit dem Rohranschlußstutzen (3, 4) verbundene Ein- bzw. Auslauföffnung (20) aufweist, die von einer mit der Stutzendichtfläche (24) zusammenwirkenden Meßkapseldichtfläche (25) umgeben ist, dadurch gekennzeichnet, daß die Stutzendichtfläche (24) von einem gegenüber dem Rohranschlußstutzen (3, 4) und/oder einem daran angeschlossenen Rohr abgedichteten Einlegestutzen (22) gebildet ist.

2. Zähler nach Anspruch 1, dadurch gekennzeichnet, daß der Gehäusetopf (2) aus ferromagnetischem Material besteht.

3. Zähler nach Anspruch 1 oder 2, dadurch gekennzeichnet, daß der Rohranschlußstutzen (3, 4) aus korrosionsbeständigem Material besteht und gegenüber dem Einlegestutzen (22) abgedichtet ist.

4. Zähler nach einem der Ansprüche 1 bis 3, dadurch gekennzeichnet, daß der Gehäusetopf (2) eine Topfeinlage (12) aus Kunststoff enthält, deren Innenform der Außenform der Meßkapsel (10) entspricht.

5. Zähler nach Anspruch 4, dadurch gekennzeichnet, daß der Einlegestutzen (22) einstückig mit der Topfeinlage (12) oder einem Teil derselben ausgebildet ist.
